# EUROPÄISCHE PATENTSCHRIFT

(11) **EP 1 866 711 B1**
(45) Veröffentlichungstag und Bekanntmachung des Hinweises auf die Patenterteilung: **05.10.2011**
(21) Anmeldenummer: 06705410.6
(22) Anmeldetag: 21.03.2006
(51) Int. Cl.: G05B 19/042, G05B 13/00, G05B 5/00

(54) **UNTERDRÜCKUNG VON SCHWINGUNGEN**
SUPPRESSION OF VIBRATIONS
SUPPRESSION DE VIBRATIONS

(30) Priorität: 07.04.2005 CH 633052005
(43) Veröffentlichungstag der Anmeldung: 19.12.2007
(73) Patentinhaber: Belimo Holding AG, 8340 Hinwil (CH)
(72) Erfinder: BALEMI, Silvano, CH-6598 Tenero TI (CH); WILD, Martin, CH-8484 Weisslingen (CH); THUILLARD, Marc, CH-8707 Uetikon am See (CH)
(74) Vertreter: Rüfenacht, Philipp Michael
(86) Internationale Anmeldenummer: PCT/CH2006/000170
(87) Internationale Veröffentlichungsnummer: WO 2006/105677

(56) Entgegenhaltungen:
- EP-A- 0 469 617
- US-A- 3 961 234
- US-A- 4 980 625
- US-A1- 2001 002 097

## Beschreibung

Die Erfindung bezieht sich auf ein Verfahren und eine Vorrichtung zur Unterdrückung von Schwingungen in einer Anlage mit einem Stellantrieb zur Betätigung einer Klappe oder eines Ventils für die Dosierung eines Gas- oder Flüssigkeitsvolumenstroms, insbesondere auf dem Gebiet HLK, Brand- oder Rauchschutz.

In der Praxis beginnen Regelkreise mit Stellantrieben für Klappen und Ventile auf dem Gebiet HLK immer wieder zu schwingen. Eine solche Schwingung kann von kurzer Dauer sein, beispielsweise während der Inbetriebnahme, es kommt aber auch vor, dass Regelkreise nie stabil eingestellt werden können. Dies führt zu einem vorzeitigen Ausfall von Stellantrieben, sie müssen vor dem Ablauf der erwarteten Lebensdauer repariert oder ersetzt werden. Es liegt im Interesse von Lieferant und Kunde, dass derartige Frühausfälle verhindert werden.

Damit Schwingungen auftreten können, müssen insbesondere zwei Bedingungen erfüllt sein:
- Amplitudenbedingung: Die Verstärkung des gesamten Systems muss wenigstens gleich 1 sein.
- Phasenbedingung: Es muss eine zeitliche Verzögerung im System geben, die ausreichend gross ist.

Eine Schwingung bleibt stationär, wenn bei einer Gesamtverstärkung von wenigstens 1 die Phasenverschiebung der gesamten Anlage bei 360° liegt.

Die unerwünschten Schwingungen können sich also nicht nur in der Frequenz unterscheiden, sondern auch in ihrer Amplitude. Sind starke Nichtlinearitäten im Spiel, wie dies beispielsweise bei ungünstig ausgelegten Ventilen der Fall ist, so kann eine Schwingung in der Regel nur in gewissen Arbeitsbereichen einer Anlage auftreten. Je nachdem kann die Amplitude einer stationären Schwingung auch unterschiedlich sein. Ist ein Regler krass falsch eingestellt, kann eine Schwingung den vollen Bereich eines Stellsignals umfassen, bis sie durch den beschränkten Ausgangsbereich des Reglers begrenzt wird. In diesem Grenzfall kann die Schwingung auch rechteckig oder nahezu rechteckig verlaufen.

In der US 6264111 A wird die Verstärkung eines Reglers, der sogenannte P-Anteil, verstellt. Ist die Verstärkung der gesamten Anlage, beispielsweise Regler, Stellglied, Klimaanlage, Raum und Sensor, klein genug, so verschwindet die Schwingung. Die Mittel zur Unterdrückung der Schwingung sind direkt im Regler integriert, die Eingangs - und Ausgangsgrössen des Reglers sind stets bekannt. Mit verschiedenen Mitteln, auch adaptiven, können Schwingungen unterdrückt oder beseitigt werden, es muss jedoch ein zum Teil markant schlechteres Regelverhalten in Kauf genommen werden. Diese Verschlechterung kann sich beispielsweise durch bleibende Temperaturabweichungen oder ein sehr träges Angleichen der Temperatur äussem.

Die Erfinder haben sich die Aufgabe gestellt, ein Verfahren und eine Vorrichtung der eingangs genannten Art zu schaffen, mit welchen Schwingungen in der Anlage unterdrückt oder beseitigt werden können, ohne dass das Regelverhalten merklich verschlechtert wird.

Bezüglich des Verfahrens wird die Aufgabe erfindungsgemäss dadurch gelöst, dass durch eine ungünstige oder falsche Einstellung oder Konfigurierung der Regelung und/oder durch störende Einflüsse erzeugte Schwingungen der Klappe oder des Ventils mittels eines in einem Mikroprozessors gespeicherten Algorithmus' detektiert und gedämpft oder unterdrückt werden. Spezielle und weiterführende Ausführungsformen des Verfahrens sind Gegenstand von abhängigen Patentansprüchen.

Der erfindungsgemässe Algorithmus basiert auf drei Komponenten:
- Schwingungserkennung
- Adaptive Filterung
- Sprungerkennung

Zur Schwingungserkennung, d. h. zur Ermittlung der Frequenz einer Schwingung, können die Minima und Maxima des Signals gesucht und das Zeitintervall dazwischen gemessen werden (Extremwertanalyse). Dies führt jedoch oft zu ungenauen oder sogar falschen Resultaten, wenn das Signal gleichzeitig mehrere Frequenzen enthält. Zur Vermeidung solcherart falscher Resultate wird eine neue Methode, Wavelet-Analyse genannt, eingeführt. Diese Methode wird vom Miterfinder M.Thuillard in der Publikation "Wavelets in Soft Computing", Wind Scientific Press, 2002, im Detail beschrieben. Ganz grob umrissen handelt es sich dabei um eine stark vereinfachte Fourier-Analyse, die mit mathematischen Grundoperationen mit Hilfe eines einfachen Mikroprozessors zum Ziel führt. Dabei werden einige wenige Frequenzbereiche definiert, damit wird ein grober Raster festgelegt. Eine Wavelet-Analyse zeigt auf, in welchem Bereich dieses Rasters die meiste Energie des Signals steckt. Dies ermöglicht eine Kontrolle, ob die zuerst gemachte Extremwertanalyse richtig war. Im Falle einer zu grossen Abweichung wird anhand der Wavelet-Analyse eine Annahme für die Schwingfrequenz generiert und entschieden, ob die Schwingungsunterdrückung überhaupt aktiviert werden soll oder nicht.

Im Rahmen der adaptiven Filterung wird ein phasenabsenkendes Glied, ein sogenanntes Lag-Glied, zur Reduktion der Verstärkung bzw. der Amplitude der Schwingung des Systems gewählt. Das für den Ansatz gewählte Lag-Glied hat folgende Eigenschaften:
- Bei sehr langsamen, niederfrequenten Änderungen des Steuersignals wird die Verstärkung des Systems nicht beeinflusst.
- Bei rascheren, höherfrequenten Änderungen des Steuersignals wird die Verstärkung reduziert, das Signal wird gedämpft.
- Ab einer gewissen Frequenz des Steuersignals bleibt die Amplitude auf einem minimalen Wert etwa konstant, die Dämpfung verharrt somit auf einem maximalen Wert.

Zur grafischen Beschreibung der adaptiven Filterung wird zweckmässig ein dem Fachmann bekanntes Bode-Diagramm verwendet, in welchem die Amplitude und der Winkel eines Signals bzw. die Verstärkung und die Dämpfung, jeweils in Abhängigkeit der Frequenz, dargestellt werden. Ein Lag-Glied ist der Kern der Schwingungsunterdrückung. Es muss richtig parametriert werden, dabei gilt es, die Eckfrequenzen des Lag-Gliedes zu definieren, wozu die Frequenz der zu dämpfenden Schwingung bekannt sein muss.

Das Lag-Glied wird mit aus dem Bode-Diagramm ermittelten Eckfrequenzen parametriert und aktiviert. In der Regel arbeitet das Filter nun bereits im etwa richtigen Frequenzband. Falls dieses noch nicht optimal sein sollte, wird durch die weiterhin laufende Schwingungserkennung geprüft, ob die Schwingung nun wie vorgegeben abklingt. Wenn nicht, werden die beiden Eckfrequenzen periodisch in Richtung tiefere Frequenzen verschoben, wodurch die Dämpfungswirkung für die Schwingungsfrequenz erhöht wird. Mit der Verschiebung der Filterfrequenz geht auch eine ändernde Phasenverschiebung einher, so dass beide Bedingungen für das Auftreten von Schwingungen, die Amplitudenbedingung und die Phasenbedingung, verändert werden, bis eine der Bedingungen nicht mehr erfüllt ist und die Schwingung abklingt. Der Algorithmus arbeitet somit selbstadaptiv.

Das Lag-Glied dämpft schnelle Änderungen des Stellsignals, weshalb der Antrieb nicht mehr in jedem Fall schnell genug auf gewollte Sprünge des Stellsignals reagiert. Wenn z. B. jemand an einem Einstellknopf für die Raumtemperatur dreht, müssen solche Sprünge erkannt und an den Antrieb weitergegeben werden. Mit anderen Worten muss die Sprungerkennung bei einem gewollten Sprung das Lag-Glied wieder ausschalten, so dass ein Sprung sofort mitgemacht werden kann. Nach dem Sprung startet der ganze Algorithmus von vorn.

Alternativ können die Eckfrequenzen des Lag-Gliedes vorübergehend in Richtung höherer Frequenzen verschoben und dann sukzessive wieder zurückgenommen werden.

Die bevorzugten Funktionen des erfindungsgemässen Algorithmus' können wie folgt zusammengefasst werden:
- Die Schwingungen im System werden adaptiv gefiltert, vorzugsweise selbstadaptiv, wobei zweckmässig ein über Eckfrequenzen parametriertes Lag-Glied als Filter eingesetzt wird.
- Bei nicht wie vorgegeben abklingenden Schwingungen werden die beiden Eckfrequenzen des Lag-Gliedes periodisch in Richtung tieferer Filterfrequenzen verschoben und damit die Dämpfung der Schwingungen erhöht.
- Wenn ein Lastsprung erkannt wird; wird sofort das Lag-Glied ausgeschaltet oder umparametriert und der Sprung mitgemacht.
- Die Klappen- und/oder Ventilkennlinie wird dynamisch linearisiert.
- Schwingungen im Bereich von 1 bis 1800 sec, insbesondere von 30 bis 300 sec, Dauer werden erkannt und bedämpft oder unterdrückt.
- Schwingungen einer Klappe bis zu einem Winkel Δϕ und/oder eines Ventils bis zu einem Hub Δh des maximalen Stellbereichs werden erfasst und bedämpft oder unterdrückt.

Der erfindungsgemäss eingesetzte Algorithmus ist vorzugsweise software-programmiert und arbeitet ohne Konfigurationserfordernisse. Er stellt zudem Informationen zum Schwingungscharakter, insbesondere Mittelwerte, Amplituden und/oder Frequenzen, zur Analyse bereit.

In Bezug auf die Vorrichtung zur Durchführung des Verfahrens wird die Aufgabe erfindungsgemäss dadurch gelöst, dass ein Mikroprozessor mit den Algorithmen zur Schwingungsunterdrückung und Linearisierung im Stellantrieb angeordnet ist.

Die Anordnung der Schwingungsunterdrückung im Stellantrieb gewährleistet bei allen handelsüblichen Reglern eine sichere Funktion der Anlage. Der eingangs erwähnte Nachteil, dass in einem Regler untergebrachte Schwingungsunterdrückungen zu markant schlechterem Regelverhalten führen, ist damit behoben.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine schwenkbare Klappe in einem Lüftungsrohr,
- Fig. 2 unbeeinflusste Schwingungen der Klappe gemäss Fig. 1,
- Fig. 3 die Klappe gemäss Fig. 1 mit Schwingungsunterdrückung,
- Fig. 4 bedämpfte Schwingungen der Klappe gemäss Fig. 3,
- Fig. 5 ein typischer Regelkreis,
- Fig. 6 eine Schwingungsunterdrückung in Ruhestellung,
- Fig. 7 eine Schwingungsunterdrückung mit eingeschaltetem Algorithmus,
- Fig. 8 eine Heizungsanlage, und
- Fig. 9 durch den Kesselregler von Fig. 8 erzeugte Schwingungen.

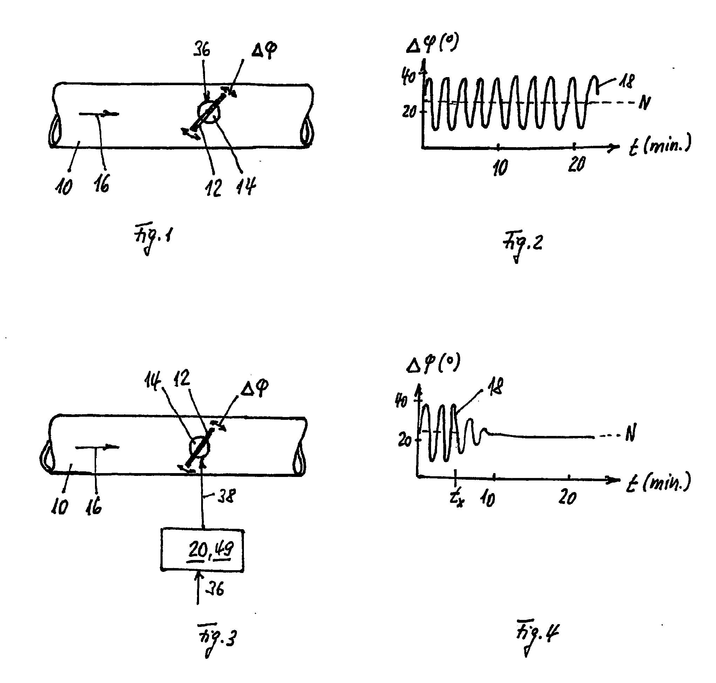

Fig. 1 zeigt einen Ausschnitt aus einem Lüftungsrohr 10 mit einer eingebauten Klappe 12, welche unter Einwirkung eines elektromotorischen Stellantriebs 14 schwenkbar ist. Durch das Lüftungsrohr 10 wird ein mit einem Pfeil dargestellter Gasvolumenstrom 16, vorliegend ein Luftstrom, geblasen. Die nach dem Stand der Technik ausgebildete Klappe schwingt um einen Winkel Δϕ von etwa ± 15°, eine Schwingungsperiode liegt bei etwa zwei Minuten.

In Fig. 2 sind die Schwingungen 18 bezüglich ihrer Amplitude proportional zum Winkel Δϕ in Abhängigkeit der Zeit t aufgezeichnet, wobei die Amplitude Δϕ der Abweichung von der mittleren Normallage N entspricht. Die Schwingungen 18 liegen im wesentlichen auf einem horizontalen Band mit parallelen Rändern.

Fig. 3 entspricht im wesentlichen Fig. 1, dem Stellantrieb 14 ist jedoch eine Schwingungsunterdrückung 20 vorgeschaltet. Diese Schwingungsunterdrückung 20 gibt ein Steuersignal 38, auch Stellgrösse genannt, an den Stellantrieb 14. Der Ablauf ist in Fig. 4 dargestellt, vorerst verlaufen die Schwingungen wie in Fig. 2. Nach der Zeit tₓ erhält der Stellantrieb 14 Steuersignale, welche die Schwingungen 18 sofort und wirkungsvoll bedämpfen, die maximalen Amplitudenauslenkungen klingen ab, bis eine Normallage N erreicht wird. Dadurch wird die Lebensdauer der Antriebe massgeblich verlängert.

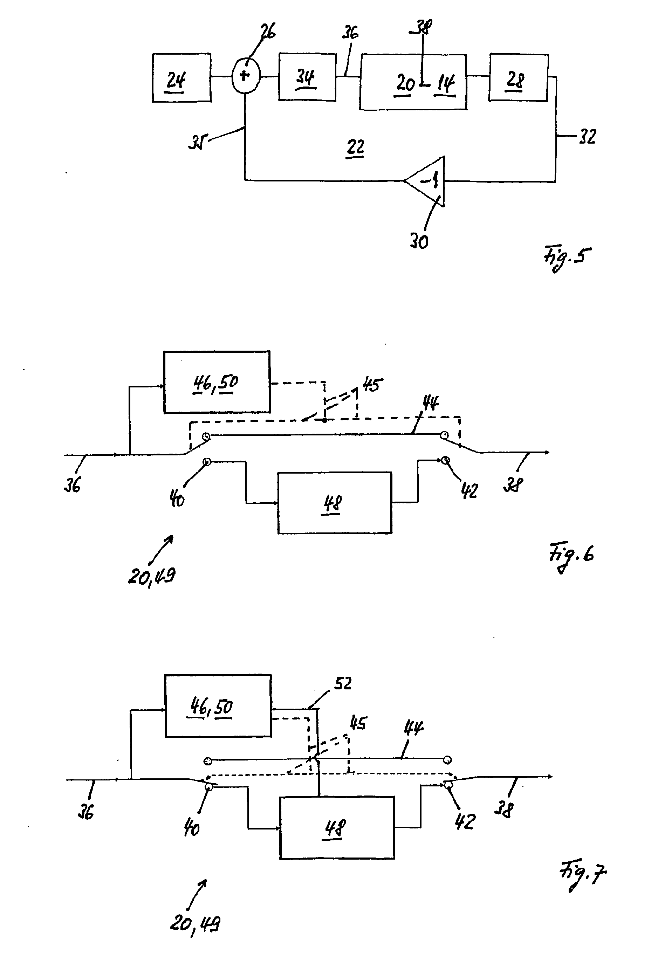

Ein in Fig. 5 dargestellter Regelkreis 22 hat eine Schwingungsunterdrückung 20, welche gleichzeitig der Linearisierung dient, die im Stellantrieb 14 angeordnet ist.

Ein Sollwertgeber 24 speist vorgegebene Steuersignale in ein Vergleichsglied 26 eines Reglers 34 ein und empfängt gleichzeitig den Ist-Wert einer Rückführgrösse 35, welche der von einer Regelstrecke 28 abgegebenen, über einen Signalinverter 30 geführten Regelgrösse 32 entspricht. Der Regler 34 berechnet eine Reglerausgangsgrösse 36 und speist diese in eine adaptive Filterung (48 in Fig. 6, 7) mit dem Algorithmus der Schwingungsunterdrückung 20 ein. Wenn die Schwingungsdetektion 46 (in Fig. 6, 7) der Schwingungsunterdrückung 20 Schwingungen feststellt, erzeugt sie ein Steuersignal 38 bzw. eine Stellgrösse für den Stellantrieb 14 mit integrierter Schwingungsunterdrückung 20, wodurch die Schwingungen 18 sofort gedämpft werden (Fig. 4). Nach einer nicht dargestellten Variante kann die Schwingungsunterdrückung 20 auch getrennt ausserhalb des Stellantriebs 14 angeordnet sein.

Eine in Fig. 6 dargestellte Schwingungsunterdrückung 20, im wesentlichen ein Mikroprozessor, ist in Ruhestellung dargestellt. Zwei logische Schalter 40, 42 sind so gestellt, dass ein Signal, die Reglerausgangsgrösse 36, über einen direkten Signalweg 44 als Stellgrösse 38 dem Stellantrieb 14 zugeführt wird. Eine Schwingungsdetektion 46 mit einer Lastsprungerkennung 50 im selben Block überwacht das Reglerausgangssignal 36 ständig auf eventuelle Schwingungen 18 (Fig. 2). Eine adaptive Filterung 48 ist abgeschaltet. Zwischen der Schwingungsdetektion 46 und den Schaltern 40, 42 besteht eine gestrichelt gezeichnete logische Verknüpfung 45.

In der Darstellung der Schwingungsunterdrückung 20 gemäss Fig. 7 hat die Schwingungsdetektion 46 über der Toleranz liegende Schwingungen der Anlage festgestellt. Die zwei logischen Schalter 40, 42 schalten um, die Reglerausgangsgrösse 36 wird nun der adaptiven Filterung 48 mit dem Algorithmus zugeführt. Die adaptive Filterung 48 wird durch eine logische Verknüpfung 52 mit durch die Schwingungsdetektion 46 gewonnenen Filterparametern versorgt. Der Algorithmus der adaptiven Filterung 48 beinhaltet vorliegend ein Lag-Glied. Dadurch setzt eine Schwingungsdämpfung ein, welche andauert, bis die Störung beseitigt ist und die Schwingungsdetektion auf die Anordnung gemäss Fig. 6 zurückschaltet.

Nach einer nicht dargestellten Ausführungsform kann der Schalter 40 durch eine gewöhnliche Verzweigung ersetzt werden.

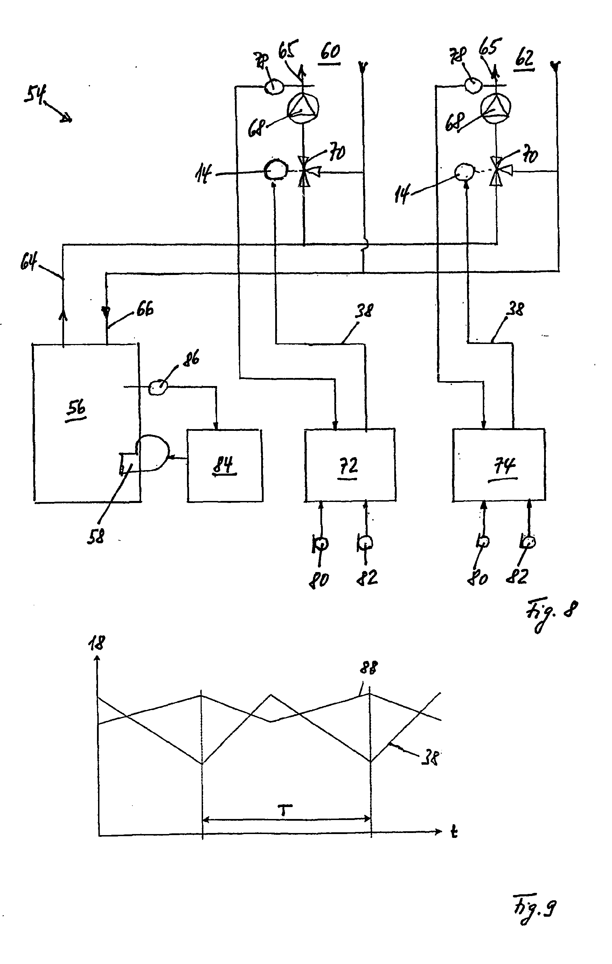

Eine in Fig. 8 dargestellte Heizungsanlage 54, wie sie beispielsweise für ein Doppeleinfamilienhaus gebraucht wird, umfasst einen Heizkessel 56 mit einem Brenner 58 und zwei Heizkreisen 60, 62 mit einem gemeinsamen, zum Heizkessel führenden Vorlauf 64 und Rücklauf 66. Beide Heizkreisläufe 60, 62 werden von je einer Umwälzpumpe 68 gespeist, über ein Mischventil 70 kann ein Teil des rücklaufenden Wassers im Vorlauf 65 des betreffenden Heizkreises 62 beigemischt werden. Die Mischventile 70 haben einen elektrischen Stellantrieb 14, welcher vom betreffenden Heizkreisregler 72, 74 Stellsignale 38 erhält. Die Heizkreisregler 72, 74 erhalten Signale von einem Temperatursensor 78 in den Heizkreisen 60, 62, einem Raumtemperaturfühler 80 und einem Aussentemperaturfühler 82.

Ein Zweipunkt-Kesselregler 84 regelt die Wassertemperatur des Heizkessels 56, indem ein Temperatursensor 86 den Brenner 58 ein- und ausschaltet. Dabei können Schwingungen entstehen, die sich nicht vermeiden lassen. Die Heizkreisregler 72, 74 versuchen, die schwankende Kesseltemperatur durch entsprechende Stellsignale 38 an die Stellantriebe 14 der Mischventile 70 zu kompensieren.

Der Verlauf der Kesselwassertemperatur 88 und des Stellsignals 38 für die Stellantriebe 14 der Mischventile 70 sind in Fig. 9 in Funktion der Zeit t dargestellt. Die Periodendauer T einer Schwingung 18 kann innerhalb einer Anlage in Abhängigkeit der Witterung stark schwanken, sie liegt typischerweise im Bereich von etwa zehn Minuten bis zwei Stunden. Das Stellsignal 38 die Stellantriebe 14 des Mischventils 70 pendelt um einen Mittelwert N (Fig. 2, 4), wobei keine extremen Sprünge zu erwarten sind.

Bei Fussbodenheizungen darf der Stellantrieb 14 auf dem Mittelweg stehen bleiben, ohne dass eine Komforteinbusse erfolgt. Bei Radiatorenheizungen kann allenfalls eine geringe Änderung der Radiatorentemperatur festgestellt werden. Bei Lufterhitzern dagegen muss der Stellantrieb 14 für das Mischventil 70 eine Korrekturbewegung ausführen, da es sonst zu unangenehmen, bemerkbaren Temperaturschwankungen kommt. Weitere Schwingungen 18 in der Heizungsanlage 54 gemäss Fig. 8 können verschiedenste Ursachen haben:
- Durch eine unzureichende Montage kann es zur Besonnung des Aussentemperaturfühlers 82 kommen. Bei wechselhaftem Wetter kann dies zu starken Schwankungen der gemessenen Aussentemperatur und dadurch zu Schwingungen führen. Die Heizkreisregler 72, 74 versuchen dies auszuregeln.
- Durch eine schwankende Besonnung kann es auch zu Störeinflüssen bezüglich der mit dem Raumtemperaturfühler 80 gemessenen Innentemperatur kommen. Die Heizkreisregler 72, 74 versuchen, auch diese Störung auszuregeln.
- Durch eine mangelhafte hydraulische Entkoppelung der zwei Heizkreise 60, 62 kann es zur Beeinflussung des einen Heizkreises durch den anderen kommen. Die beiden Heizkreise können sich gegenseitig zum Schwingen anregen.
- bei einem falsch konfigurierten Regler können aufgrund der falschen Einstellungen für das P-Band oder der Nachstellzeit Schwingungen erzeugt werden. Die Perioden der Schwingungen sind anlagenspezifisch, sie betragen in der Regel etwa drei bis fünf Minuten.

Nach einer nicht dargestellten, jedoch bevorzugten Variante von Fig. 8 ist eine Schwingungsunterdrückung 20 in den Stellantrieb 14 für die Mischventile 70 der beiden Heizkreise 60, 62 integriert, welche unterwünschte, stationäre Schwingungen erkennt und eliminiert.

## Patentansprüche

1. Verfahren zur Unterdrückung von Schwingungen (18) in einer Anlage mit einem Stellantrieb (14) zur Betätigung einer Klappe (12) oder eines Ventils (70) für die Dosierung eines Gas- oder Flüssigkeitsvolumenstroms (16), wobei mit einem Regler (34) eine Reglerausgangsgrösse (36) berechnet und daraus ein Steuersignal (38) für den Stellantrieb (14) erzeugt wird,
**dadurch gekennzeichnet, dass**
Schwingungen (18) der Klappe (12) oder des Ventils (70) detektiert werden, indem die Reglerausgangsgrösse (36) durch eine Schwingungsdetektion (46) mit einem in einem Mikroprozessor gespeicherten Algorithmus überwacht wird, und Schwingungen (18) bedämpft oder unterdrückt werden, indem die Reglerausgangsgrösse (36) einem adaptiven Filter (48) zugeführt und das Steuersignal (38) vom adaptiven Filter (48) erzeugt wird.

2. Verfahren nach Anspruch 1, **dadurch gekennzeichnet, dass** das adaptive Filter (48) mit durch die Schwingungsdetektion (46) gewonnenen Filterparametern versorgt wird.

3. Verfahren nach Anspruch 1 oder 2, **dadurch gekennzeichnet, dass** zur Ermittlung einer Frequenz der Schwingung (18) mittels der Schwingungsdetektion (46) zusätzlich zu einer Extremwertanalyse der Reglerausgangsgrösse (36) eine Wavelet-Analyse durchgeführt wird.

4. Verfahren nach einem der Ansprüche 1 bis 3, **dadurch gekennzeichnet, dass** als adaptives Filter ein über Eckfrequenzen parametrierbares Lag-Glied eingesetzt wird.

5. Verfahren nach Anspruch 4, **dadurch gekennzeichnet, dass** bei nicht wie vorgegeben abklingenden Schwingungen (18) die Eckfrequenzen des Lag-Glieds periodisch in Richtung tieferer Filterfrequenzen verschoben werden und damit eine Dämpfungswirkung für die Schwingungsfrequenz erhöht wird.

6. Verfahren nach einem der Ansprüche 1 bis 5, **dadurch gekennzeichnet, dass** der Algorithmus einen Lastsprung (50) erkennt, sofort die adaptive Filterung (48) ausschaltet oder umparametriert und den Lastsprung (50) mitmacht.

7. Verfahren nach einem der Ansprüche 1 bis 6, **dadurch gekennzeichnet, dass** der Algorithmus die Klappen- und/oder Ventilcharakteristik dynamisch linearisiert.

8. Verfahren nach einem der Ansprüche 1 bis 7, **dadurch gekennzeichnet, dass** der Algorithmus Schwingungen (18) im Bereich von 1 bis 1800 sec, Dauer erkennt und bedämpft oder unterdrückt.

9. Verfahren nach einem der Ansprüche 1 bis 8, **dadurch gekennzeichnet, dass** der Algorithmus Schwingungen (18) der Klappe (12) bis zu einem Winkel Δϕ und/oder eines Ventils (70) bis zu einem Hub Δh des maximalen Stellbereichs erfasst und bedämpft oder unterdrückt.

10. Vorrichtung zur Unterdrückung von Schwingungen (18) in einer Anlage mit einem Stellantrieb (14) zur Betätigung einer Klappe (12) oder eines Ventils (70) für die Dosierung eines Gas- oder Flüssigkeitsvolumenstroms (16), wobei die Anlage einen Regler (34) zur Berechnung einer Reglerausgangsgrösse (36) umfasst, **dadurch gekennzeichnet, dass** ein Mikroprozessor (49) mit Algorithmen zur Schwingungsdetektion (46) und Schwingungsunterdrückung (20) im Stellantrieb (14) angeordnet ist, wobei die Schwingungsunterdrückung (20) zur Erzeugung eines Steuersignals (38) für den Stellantrieb (14) aus der Reglerausgangsgrösse (36) ein adaptives Filter (48) umfasst.

## Claims

1. Method for the suppression of vibrations (18) in a system having an actuating drive (14) for actuating a flap (12) or a valve (70) for the dosing of a gas or liquid volume flow (16),
wherein by means of a regulator (34), a regulator output variable (36) is calculated and from this a control signal (38) for the actuating drive (14) is generated,
**characterized in that**
vibrations (18) of the flap (12) or of the valve (70) are detected by virtue of the regulator output variable (36) being monitored by means of a vibration detection arrangement (46) with an algorithm stored in a microprocessor, and vibrations (18) are damped or suppressed by virtue of the regulator output variable (36) being supplied to an adaptive filter (48), and the control signal (38) being generated by the adaptive filter (48).

2. Method according to Claim 1, **characterized in that** the adaptive filter (48) is supplied with filter parameters obtained by means of the vibration detection arrangement (46).

3. Method according to Claim 1 or 2, **characterized in that**, in order to determine a frequency of the vibration (18) by means of the vibration detection arrangement (46), in addition to an extreme value analysis of the regulator output variable (36), a wavelet analysis is carried out.

4. Method according to one of Claims 1 to 3, **characterized in that** a lag element, which can be parameterized by means of cut-off frequencies, is used as an adaptive filter.

5. Method according to Claim 4, **characterized in that**, in the case of vibrations (18) which do not decay as predefined, the cut-off frequencies of the lag element are periodically moved in the direction of lower filter frequencies, and a damping effect for the vibration frequency is thereby increased.

6. Method according to one of Claims 1 to 5, **characterized in that** the algorithm detects a load step (50), immediately deactivates or re-parameterizes the adaptive filtering arrangement (48), and makes the load step (50) in an accompanying fashion.

7. Method according to one of Claims 1 to 6, **characterized in that** the algorithm dynamically linearizes the flap and/or valve characteristic.

8. Method according to one of Claims 1 to 7, **characterized in that** the algorithm detects, and damps or suppresses, vibrations (18) in the range from 1 to 1800 seconds' duration.

9. Method according to one of Claims 1 to 8, **characterized in that** the algorithm detects, and damps or suppresses, vibrations (18) of the flap (12) up to an angle Δϕ and/or of a valve (70) up to a lift Δh of the maximum actuating range.

10. Device for suppressing vibrations (18) in a system having an actuating drive (14) for actuating a flap (12) or a valve (70) for the dosing of a gas or liquid volume flow (16), the system comprising a regulator (34) for calculating a regulator output variable (36), **characterized in that** a microprocessor (49) with algorithms for vibration detection (46) and vibration suppression (20) is arranged in the actuating drive (14), the vibration suppression arrangement (20) comprising an adaptive filter (48) for generating a control signal (38) for the actuating drive (14) from the regulator output variable (36).

## Revendications

1. Procédé pour supprimer des vibrations (18) dans une installation comprenant un entraînement de commande (14) pour l'actionnement d'un volet (12) ou d'une soupape (70) pour le dosage d'un courant volumique de gaz ou de liquide (16), une grandeur de départ de régulateur (36) étant calculée avec un régulateur (34) et un signal de commande (38) pour l'entraînement de commande (14) étant produit à partir de celle-ci,
**caractérisé en ce que**
des vibrations (18) du volet (12) ou de la soupape (70) sont détectées en surveillant la grandeur de départ de régulateur (36) par une détection de vibrations (46) avec un algorithme mémorisé dans un microprocesseur, et les vibrations (18) sont amorties ou supprimées en acheminant la grandeur de départ de régulateur (36) à un filtre adaptatif (48) par lequel est produit le signal de commande (38).

2. Procédé selon la revendication 1, **caractérisé en ce que** le filtre adaptatif (48) reçoit des paramètres de filtre obtenus par la détection des vibrations (46).

3. Procédé selon la revendication 1 ou 2, **caractérisé en ce que** pour déterminer une fréquence des vibrations (18) au moyen de la détection de vibrations (46), on effectue une analyse d'ondelettes en plus d'une analyse de valeurs extrêmes de la grandeur de départ de régulateur (36).

4. Procédé selon l'une quelconque des revendications 1 à 3, **caractérisé en ce que** l'on utilise comme filtre adaptatif un élément de retard paramétrable par le biais de fréquences coin.

5. Procédé selon la revendication 4, **caractérisé en ce que** lorsque les vibrations (18) ne diminuent pas comme prévu, les fréquences coin de l'élément de retard sont déplacées périodiquement dans la direction de fréquences de filtre plus basses, et de ce fait l'effet d'amortissement pour la fréquence de vibration est accru.

6. Procédé selon l'une quelconque des revendications 1 à 5, **caractérisé en ce que** l'algorithme reconnaît un saut de charge (50), coupe immédiatement le filtrage adaptatif (48) ou le soumet à un reparamétrage, et participe au saut de charge (50).

7. Procédé selon l'une quelconque des revendications 1 à 6, **caractérisé en ce que** l'algorithme effectue une linéarisation dynamique de la caractéristique du volet et/ou de la soupape.

8. Procédé selon l'une quelconque des revendications 1 à 7, **caractérisé en ce que** l'algorithme reconnaît des vibrations (18) d'une durée de l'ordre de 1 à 1800 s, et les amortit ou les supprime.

9. Procédé selon l'une quelconque des revendications 1 à 8, **caractérisé en ce que** l'algorithme détecte des vibrations (18) du volet (12) jusqu'à un angle Δϕ et/ou d'une soupape (70) jusqu'à une course Δh de la plage de commande maximale, et les amortit ou les supprime.

10. Dispositif pour supprimer des vibrations (18) dans une installation comprenant un entraînement de commande (14) pour l'actionnement d'un volet (12) ou d'une soupape (70) pour le dosage d'un courant volumique de gaz ou de liquide (16), l'installation comprenant un régulateur (34) pour le calcul d'une grandeur de départ de régulateur (36), **caractérisé en ce qu'**un microprocesseur (49) avec des algorithmes pour la détection de vibrations (46) et la suppression de vibrations (20) est disposé dans l'entraînement de commande (14), la suppression de vibrations (20) comprenant un filtre adaptatif (48) pour la production d'un signal de commande (38) pour l'entraînement de commande (14) à partir de la grandeur de départ de régulateur (36).
